# EUROPEAN PATENT APPLICATION

(11) **EP 0 738 623 A2**
(43) Date of publication of application: **23.10.1996**
(21) Application number: 96104766.9
(22) Date of filing: 26.03.1996
(51) Int. Cl.: B60K 41/00

(54) **Servo-assisted hydraulic control device for motor vehicles**

(30) Priority: 18.04.1995 IT VE950010
(71) Applicant: FADIEL ITALIANA S.R.L., 30020 Marcon (IT)
(72) Inventor: Domeneghini, Fabio, 30020 S. Liberale di Marcon (IT)
(74) Representative: Piovesana, Paolo

(57) **Abstract**

A servo-assisted hydraulic control device for motor vehicles, comprising an actuator (10,12) for operating the vehicle brake pedal (14) and/or accelerator pedal (16) by a manual command (18), characterised by comprising:
- a hydraulic circuit with a reservoir (8), a pump (4), a member (6) for controlling the pressure in said circuit and a hydraulic control unit (2),
- a cylinder (20) housing in its interior a piston (26) which divides the internal cavity of said cylinder into three chambers, namely a pressure chamber connected to the hydraulic circuit, a thrust chamber connected to said actuator (10,12), and a control chamber operationally interposed between the two,
- at least one valve (64) housed in said piston (26) and axially movable relative thereto between a position in which it opens and a position in which it closes passage between the pressure chamber and the control chamber,
- at least one valve (28) mounted within said piston (26) and inserted between said reservoir (8) and the thrust chamber of said cylinder (20) to interrupt its communication when said piston (26) is moved from its rest position,
- a member (24) movable axially relative to said piston (26) to operate said valve (64), and provided with means (58,60,56,54) for communication between the control chamber of said cylinder (20) and said reservoir (8),
- means (62) interposed between said member (24) and said valve (64) to independently cause closure of said communication means (58,60,56,54) and activation of said valve (64), in relation to the position of said member (24) and said piston (26), and
- a lever (18) for manually controlling the axial movements of said member (24).

## Description

This invention relates to a servo-assisted hydraulic control device for motor vehicles.

Devices are known for operating the brake and/or accelerator pedals in motor vehicles intended for persons totally or partially unable to use their legs. One of these comprises, applied to the steering column, a lever operable manually by the handicapped driver to act on the brake or accelerator pedal. If both the brake and the accelerator are to be manually controlled, two levers acting independently on the corresponding pedal have to be provided.

A drawback of these known devices is the large manual force required for their operation by the driver.

A further drawback is that their installation position is obligatory and cannot be changed in order to optimize driving.

A further drawback is that they cannot be individually adapted to the driver's physical condition.

Electrical actuators acting on the pedal assembly are also known, they being controlled by lever switches operable manually by the driver.

A drawback of these known devices is that they are unable to transmit commands to the brake and/or accelerator pedal with the necessary control fineness.

A further drawback is that if a fault occurs, they become ineffective, so completely removing the facility for vehicle control.

An object of the invention is to provide a servo- assisted hydraulic control device for a motor vehicle pedal assembly.

A further object of the invention is to provide a device applicable practically to any motor vehicle without requiring any modification to the original controls and hence without having to work on already type-approved parts.

A further object of the invention is to provide a device in which the pedal can be operated with the necessary gradualness and precision.

A further object of the invention is to provide a device in which the force required for its operation can be adapted to the driver's physical condition.

A further object of the invention is to provide a device which always enables the required manoeuvre to be effected, even in the case of a fault.

All these objects and further one which will result from the following description are attained through a servo- assisted hydraulic control device for motor vehicles as described in claim 1.

A preferred embodiment of the present invention is further clarified hereinafter with reference to the accompanying drawings, in which:
- Figure 1: is a schematic perspective view of a device according to the invention provided for operating both the brake pedal and the accelerator pedal of a motor vehicle by means of a single manually operated lever,
- Figure 2: is a partly sectional side view of the hydraulic control unit, and

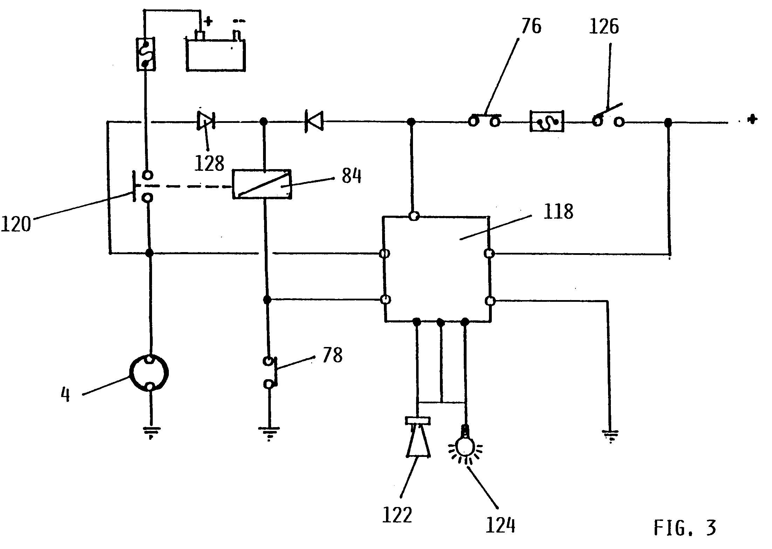

- Figure 3: shows the electrical schematic of the device.

As can be seen from the figures, the device according to the invention comprises a hydraulic control unit, indicated overall by 2, to which there are connected a hydraulic control circuit with a pump 4, a unit 6 for controlling the oil pressure and accumulation, an oil reservoir 8, and a hydraulic operating circuit for a pair of actuators 10,12 acting on the brake pedal 14 and the accelerator pedal 16 respectively. For reasons of completeness, the drawings show a single control unit 2 provided with a lever 18 which when suitably operated enables either the brake pedal 14 or the accelerator pedal 16 to be controlled at the choice of the driver, as will be apparent hereinafter. However a hydraulic unit for controlling only the brake pedal 14 or only the accelerator pedal 16 could be provided, or two separate control units, each able to control one of the two pedals 14,16.

Consequently the ensuing description is limited to the case of the brake pedal 14 alone, but is also valid for control of the accelerator pedal 16.

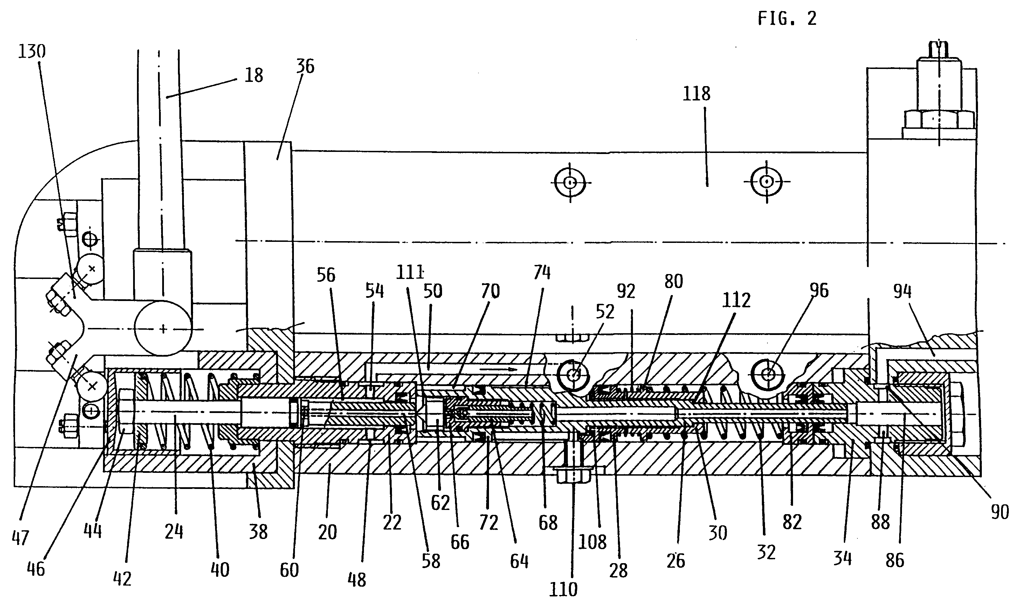

The control unit 2 comprises a cylinder 20 provided with an axial cavity housing, from left to right with reference to Figure 2, a guide element 22 for an operating rod 24, a piston 26, an annular valve externally embrancing a portion of said piston 26, a guide element 30 for a return spring 32 for the piston 26 and an endpiece 34 for sealing said cavity and for guiding said piston 26.

The guide element 22 for the rod 24 is mounted at the opposite end of the cylinder 20 to the endpiece 34 and has one end which projects from said cylinder and on which there can be mounted a turred 36, common also to the accelerator control unit 118, and a cylindrical container 38 housing a spring 40 for returning the rod 24 into its rest position (see Figure 2). This spring is interposed between the end of the container 38 and a retention disc 42 retained in place by a nut 44 screwed onto the end of said rod 24.

The end of the rod 24 and of the return spring 40, the retention disc 42 and the nut 44 are housed in a cylindrical socket 46 slidable axially within the cylindrical container 38, and against the base of which there externally rests the thrust head of a rocker arm 47, which is rigid with the lever 18 and pivoted together with this latter to the turret 36.

The guide element 22 for the rod 24 comprises in its outer cylindrical surface a circumferential groove forming an annular chamber 48, into which there opens a channel 50 provided in the body of the cylinder 20 and connected to the reservoir 8 by a conduit 52. The annular chamber 48 is also connected, by a pair of radial channels 54, to a second annular chamber 56 provided in the inner cylindrical surface of the guide element 22, ie in that surface embracing the rod 24.

The rod 24 comprises an axial cavity 58 extending from that end distant from the nut 44 as far as a radial channel 60, which connects said axial cavity 58 to the inner annular chamber 56.

The piston 26 is housed within the cavity of the cylinder 20 in a position facing the guide element 22 for the rod 24, and internally comprises an axial cavity along its entire length, it being divided externally into a number of different diameter portions.

At that end of the piston 26 facing the guide element 22 for the rod 24 there is provided a guide cavity for a valving element 62 having a triangular cross-section and a point which when in contact with the rod 24 maintains its axial cavity 58 closed.

The valving element 62 rests against a needle valve 64 housed in a guide element 66 which itself is housed in the axial cavity of the cylinder 20. A spring 68 maintains the needle valve 64 in its closed position, with that end facing the valving element 62 slightly projecting from the guide element 66.

That end portion of the piston 26 close to the guide element 22 for the rod 24 comprises an annular chamber 70 bounded by a flange 72 which keeps it separated from a further annular chamber 74 connected to the conduit 52 leading to the reservoir 8. That end of the annular chamber 74 distant from the flange 72 can be closed by the annular valve 28, which can undergo limited axial movements relative to the piston 26 and faces the annular guide element 30 for the spring 32 which returns the piston 26 to rest. The return spring 32 is interposed between a flange 80 provided in the guide element 30, and a guide element 82 for the piston 26, which rests against the endpiece 34 closing the cavity in the cylinder 20.

The endpiece 34 comprises an axial cavity 86 connected via a pair of radial channels 88 to an annular chamber 90, into which the conduit 94 connecting the unit 2 to the oil pressure monitoring and accumulation unit 6 opens.

A small spring 92 for closing the annular valve 28 is interposed between said annular valve 28 and the flange 80 of the guide element 30 for the spring 32.

The conduit 96 connecting the unit 2 to the actuator 10 of the brake pedal 14 opens into that part of the cavity part of the cylinder 20 surrounding the spring 32.

The unit 6 consists substantially of an oil accumulator 98 connected to the unit 2 by the conduit 94 and to the pump 4, via a non-return valve (not shown), by a conduit 100. The unit 6 is also provided with a minimum-pressure pressure switch 102 and a maximum-pressure pressure switch 104, their contacts 76 and 78 being normally closed and being connected in series with the main switch 126, operable for example by the ignition key, and with the relay 84, the contact 120 of which controls the operation of the pump 4. An electronic circuit 118 for operating a warning horn 122 and a warning lamp 124 is also mounted on the unit 6.

The device according to the invention also comprises a plurality of different gaskets providing a seal between those relatively moving parts requiring mutual sealing. These gaskets are shown in Figure 2, but are not described as they apparent to the expert of the art.

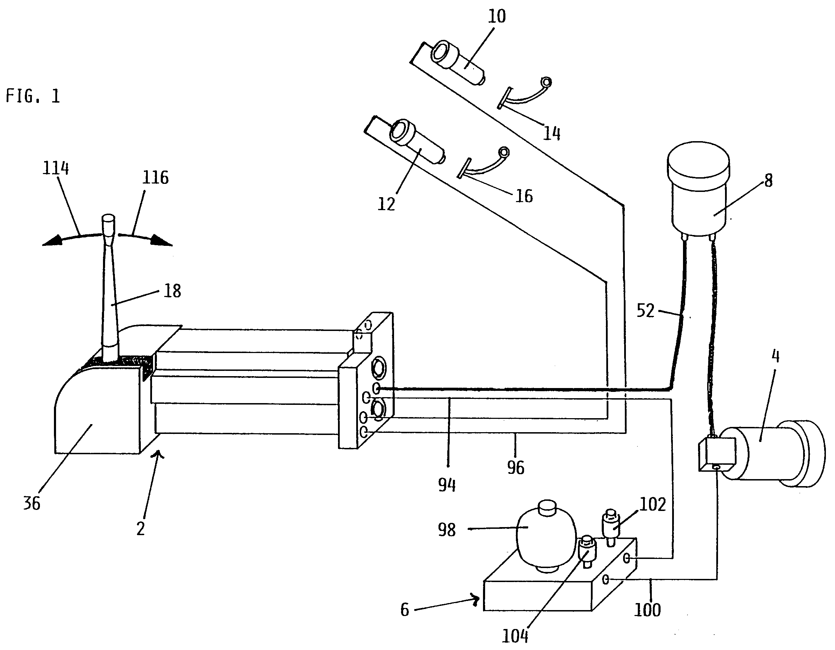

For a better understanding of the operation of the device of the invention, reference will be made for convenience to the rest condition (see Figure 2), in which the brake pedal 14 is deactivated. In this condition:
- the oil arriving from the reservoir 8 via the conduit 52 falls into the cylinder 20 and completely fills the channel 50, the annular chamber 48, the radial channel 54, the annular chamber 56, the radial channel 60, the axial cavity 58, the annular chamber 70 and the chamber surrounding the valving element 62. In this condition the annular valve 28 is maintained open, and in particular spaced from an annular step 108 provided in the piston 26, by virtue of interference between the edge of said valve and a screw 110 applied to said cylinder 20 and partly projecting into its internal cavity, so that the oil originating from the reservoir 8 also fills that cylindrical cavity portion bounded by the flange 72 of the piston 26 and the guide element 82, plus the conduit 96 and actuator 10. During the initial activation of the device the air must be completely removed from the circuit, for which purpose the actuator 10 is provided with a conventional bleed valve.
In the described rest condition:
- the operating lever 18 is in the (vertical) position shown in Figure 1 and the rocker arm 47 is not urged by the rod 24, which is maintained at rest by the spring 40,
- the axial cavity 58 in the rod 24 is open, in that its end is detached from the valving element 62 which rests against a stop ring 111 provided in the piston 26, and maintains the needle valve 64 urged by the spring 68 closed,
- the annular spring guide element 30, urged by the spring 32, engages the piston 26 at a pair of cooperating annular steps 112, and urges it by means of its end annular surface against the guide element 22 for the rod 24,
- the pump 4 maintains the oil under pressure in the accumulator 98 and, via the conduit 94, in the annular cavity 90, in the chamber 86 and in the internal axial cavity of the piston 26, due to the fact that as stated the needle valve 64 is closed. This pressure acts in the same direction as the spring 32, which can consequently be under-dimensioned, so facilitating direct manual operation of the piston 26 should a fault develop in the hydraulic system, as will be apparent hereinafter.

If under these conditions the driver lightly operates the lever 18 in the direction of the arrow 114 of Figure 1, the arm 47 presses against the socket 46 which, overcoming the elastic reaction of the spring 40, causes the rod 24 to undergo a small axial movement from left to right, with reference to Figure 2: It should be noted that during this stage the presence of the socket 46 ensures perfect axiality of movement of the rod 24 notwithstanding the eccentricity of the thrust imparted by the arm 47, this axiality being necessary because of the narrow tolerances with which the various parts are constructed.

The movement of the rod 24 from its rest condition causes it to make contact with the valving element 62, which firstly closes its axial cavity 58 and then rests against the needle valve 64, causing it to open. As a result of this opening, the pressurized oil upstream of said needle valve 64 passes through this into the downstream region, to urge the piston 26 rearwards against the elastic reaction of the spring 32. The initial part of the rearward travel of the piston 26 causes the annular step 108 of said piston to sealedly rest against the annular valve 28 consequently trapping the oil contained in the internal cavity of the cylinder 20 downstream of said valve 28. With further operation of the lever 18 and consequent axial movement of the rod 24, the pressurized oil which continues to flow through the needle valve 64 progressively urges the piston 26 rearwards, so causing the previously trapped oil to flow through the conduit 96, to operate the actuator 10 and hence the brake pedal 14. It is apparent that if the driver ceases to operate the lever 18 so that the rod 24 is no longer urged axially, the thrust of the valving element 62 against the needle valve 64 ceases, and as soon as the piston has moved a sufficient extent to reclose this latter, the flow of new pressurized oil ceases with consequent cessation of piston thrust on the oil fed to the actuator 10. In short, an equlibrium conditions is reached in which for a given position of the lever 18 there corresponds a precise position of the piston 26 and hence a precise condition of operation of the brake pedal 14.

With adequate machining precision of the various parts a considerable fineness and sensitivity of pedal movement can be achieved.

If the driver now operates the lever 18 in the reverse direction, ie in the direction of the arrow 116, the elastic reaction of the spring 40, no longer stressed, tends to move the rod 24 axially towards its rest condition. During this stage the greater pressure upstream of the valving element 62 maintains this adhering to the rod 24 to hence maintain its axial cavity closed, until said valving element encounters the stop ring 111 provided in the piston 26. From this point onwards the axial travel of the rod 24 is no longer followed by the valving element 62, which opens the axial cavity 58 and enables the pressurized oil contained in the chamber surrounding the valving element 62 and in the annualr chamber 70 to flow to discharge (into the reservoir 8) via the cavity 58, the radial channel 60, the annular chamber 56, the radial channels 54, the channel 50 and the conduit 52.

Following this oil discharge, the eleastic reaction of the spring 32, the elastic reaction of the air spring formed by the accumulator 98 and the mechanical elastic reaction of the brake pedal 14 prevail on the piston 26, the sum total of these effects urging the piston 26 towards its rest condition, with withdrawal of oil from the actuator 10.

Correct operation of the device is ensured by maintaining a pressure in the hydraulic circuit which is higher than the set value of the minimum- pressure pressure switch 102.

In practice, on closing the main switch 126 the relay 84 is energized so that its contact 120 powers the pump 4, which progressively pressurizes the hydraulic circuit.

When the pressure reaches the set value of the minimum- pressure pressure switch 102, this opens its contact 76, but the pump 4 remains powered because the relay remains energized via its contact 120 and a diode 128. On exceeding the set value of the maximum-pressure pressure switch 104, this opens its contact 78 to de-energize the relay 84 and interrupt power supply to the pump 4.

During the use of the device, the pressure in the hydraulic circuit gradually falls firstly to below the maximum value, to cause the contact 78 to reclose, and then finally to below the minimum value, causing the contact 76 to reclose with consequent energization of the relay 84 in accordance with the already described cycle. In practice, under correct operating conditions the pressure in the hydraulic circuit exceeds the set value of the minimum-pressure pressure switch and the contact 76 is open. It closes only when the pressure falls to a value less than the minimum valve and remains closed for the short time required for the pump 4 to return the pressure to above this value.

The closed or open state of the contact 76 is monitored by the electronic circuit 118 by comparing the voltages upstream and downstream of this latter. If the closure time of said contact exceeds a maximum time determined by the electronic circuit 118, this signifies that the hydraulic circuit is faulty, this being indicated by a warning horn 122 and a warning lamp 124. However, even in the case of a fault, operating the lever 18 causes the rod 24 to mechanically thrust the piston 26, which firstly causes closure of the annular valve 28 and the trapping of a certain quantity of oil, which can then be fed by the operation of the lever 18 through the conduit 96 to the actuator 10, to operate the brake pedal 14. Such an operation is obviously not servo- assisted, but is in any event sufficient for an emergency manoeuvre.

As stated, that described in relation to the brake pedal can also be achieved for the accelerator pedal. The drawings in fact show a double device, with one unit for operating the brake pedal 14 and another unit, indicated overall by 118 in Figure 2, for operating the accelerator pedal 16.

The second unit 118, which is operationally identical to the first even though of different dimensions, acts via a different actuator 12 on the accelerator pedal, but is controlled by the same lever 18, by operating it in the opposite direction, via a second rocker arm 130. It is however possible for the two control units to be provided with two different levers, and also to be positioned in the vehicle in different positions in relation to the requirements of the driver.

As generally different control pressures are required for operating the brake pedal and accelerator pedal, a pressure reducer (not shown) is interposed in the circuit 94 of one or other cylinder to obtain the required difference.

From the aforegoing, and independently of the chosen configuration, the device of the invention is particularly advantageous, and in particular:
- it is totally servo-assisted and enables the brake and/or accelerator pedal to be operated with minimum force by the driver,
- it can be adapted to driver requirements both in terms of the location of the operating lever or levers, and in terms of the amount of force to be applied. In this respect, this force depends only on the elastic reaction of the return spring 40 for the rod 24, which spring can be easily and quickly replaced with another of different rigidity,
- it enables considerable movement accuracy to be achieved, allowing the driver to act with the required precision on the brake and/or accelerator pedal,
- the modifications required to the vehicle are all external to the pedals, so that no modification is required to the mechanical systems with which the vehicle has left the factory; consequently it does not infringe current requirements concerning vehicle type-approval,
- it is of extremely rapid and flexible installation, in the sense that apart from the actuators 10 and 12 for the pedals, which obviously have to be positioned to correspond with these, the remainder can be positioned in the most comfortable position for the driver,
- it is of simple construction and of safe and reliable operation, assisted inter alia by a series of optical and acoustic warning which give timely notice of any cause of maloperation,
- it is of considerable safety in that it is able to be operated in the case of accidental and sudden faults in the vehicle hydraulic system.

## Claims

1. A servo-assisted hydraulic control device for motor vehicles, comprising an actuator (10,12) for operating the vehicle brake pedal (14) and/or accelerator pedal (16) by a manual command (18), characterised by comprising:
- a hydraulic circuit with a reservoir (8), a pump (4), a member (6) for controlling the pressure in said circuit and a hydraulic control unit (2),
- a cylinder (20) housing in its interior a piston (26) which divides the internal cavity of said cylinder into three chambers, namely a pressure chamber connected to the hydraulic circuit, a thrust chamber connected to said actuator (10,12), and a control chamber operationally interposed between the two,
- at least one valve (64) housed in said piston (26) and axially movable relative thereto between a position in which it opens and a position in which it closes passage between the pressure chamber and the control chamber,
- at least one valve (28) mounted within said piston (26) and inserted between said reservoir (8) and the thrust chamber of said cylinder (20) to interrupt its communication when said piston (26) is moved from its rest position,
- a member (24) movable axially relative to said piston (26) to operate said valve (64), and provided with means (58,60,56,54) for communication between the control chamber of said cylinder (20) and said reservoir (8),
- means (62) interposed between said member (24) and said valve (64) to independently cause closure of said communication means (58,60,56,54) and activation of said valve (64), in relation to the position of said member (24) and said piston (26), and
- a lever (18) for manually controlling the axial movements of said member (24).

2. A device as claimed in claim 1, characterised in that the hydraulic circuit is provided with an oil accumulator (98).

3. A device as claimed in claim 2, characterised in that between the pump (4) and the oil accumulator (98) there is interposed a non-return valve directed such as to prevent passage of the oil contained in the accumulator (98) towards the pump (4).

4. A device as claimed in claim 1, charaterised in that the pressure control member (6) comprises a minimum-pressure pressure switch (102) and a maximum-pressure pressure switch (104), each provided with a rest contact (76,78) connected in series with a relay (84) for powering the pump (4).

5. A device as claimed in claim 4, characterised in that the relay (84) is provided with a self-maintaining contact via the rest contact (78) of the maximum-pressure pressure switch (104).

6. A device as claimed in claim 4, characterised by comprising an electronic circuit (118) connected to the upstream and downstream sides of the rest contact (76) of the minimum-pressure pressure switch and also provided with warning alarms (122,124) activated whenever the closure state of said contact (76) during operation persists beyond a predetermined time.

7. A device as claimed in claim 1, characterised in that the delivery side of the pump (4) is connected to the pressure chamber, which comprises an axial cavity provided in said piston (26).

8. A device as claimed in claim 7, characterised in that the valve (64) interposed between the pressure chamber and the control chamber is a needle valve.

9. A device as claimed in claim 1, characterised by comprising, associated with the cylinder (20), a rod (24) containing an axial cavity (56) communicating with the hydraulic circuit and associated with a valving element (62) facing the mouth of said axial cavity and movable between a position in which this latter is closed and a position of activation of said valve (64).

10. A device as claimed in claim 9, characterised in that the piston (26) is provided with stop means (110) for said valving element (62) which act in the sense of maintaining the axial cavity (58) within said member (24) open when this latter is in its rest condition.

11. A device as claimed in claim 1, characterised in that the member (24) consists of a rod provided with elastic means (40) acting in the sense of maintaining it in its rest condition when said lever (18) is in the neutral position.

12. A device as claimed in claim 11, characterised in that the elastic means associated with the rod (24) consist of an interchangeable spring.

13. A device as claimed in claim 1, characterised by comprising, associated with the lever (18), a rocker arm acting on an intermediate member (46) for converting the angular movement of said lever (18) into an axial movement of said rod (24).

14. A device as claimed in claim 1, characterised in that the thrust chamber consists of that cavity portion of the cylinder which is bounded by the valve (28) when closed, and comprises the aperture through which the oil leaves towards the actuator (10,12).

15. A device as claimed in claim 1, characterised in that the control chamber is bounded upstream by the valve (64) and downstream by a circumferential rib (72) provided in said piston.

16. A device as claimed in claim 9, characterised in that the control chamber comprises that cavity part of the cylinder (20) surrounding the valving element (62) and an annular chamber (70) provided at the end of the piston (26).

17. A device as claimed in claim 1, characterised in that a compensation chamber (74) is interposed between the control chamber and the thrust chamber.

18. A device as claimed in claim 17, characterised in that the compensation chamber substantially consists of an annular chamber bounded by a rib (72) provided in the piston (26) and by the valve (28).

19. A device as claimed in claim 1, characterised by comprising two cylinders (20,118) connected to two separate actuators (10,12) for operating the brake pedal (14) and the accelerator pedal (16), and a single rocker arm assembly connected to said lever (18) and provided with two arms (47,120) which are made to act on the operating members (24) for the valve (64) of the two cylinders (20,118) by rotating said lever (18) in the two opposite directions.

20. A device as claimed in claim 19, characterised in that a pressure reducer is inserted in one of the two pressure circuits connected to the two cylinders (20,118).
